# EUROPEAN PATENT SPECIFICATION

(11) **EP 1 633 825 B1**
(45) Date of publication and mention of the grant of the patent: **19.11.2008**
(21) Application number: 04754357.4
(22) Date of filing: 04.06.2004
(51) Int. Cl.: C09D 127/12, C09D 127/18, C09D 181/04, C09D 181/06, C09D 179/08, C09D 171/00, B29B 9/06

(54) **NON-STICK POWDER COATING**
ANTIHAFTPULVERBESCHICHTUNG
REVETEMENT EN POUDRE ANTI-ADHESIF

(30) Priority: 06.06.2003 US 476427 P
(43) Date of publication of application: 15.03.2006
(73) Proprietor: Akzo Nobel Coatings International B.V., 6824 BM Arnhem (NL)
(72) Inventor: CAVERO, Jose, Chicago, IL 60634 (US)
(74) Representative: Schalkwijk, Pieter Cornelis
(86) International application number: PCT/US2004/017733
(87) International publication number: WO 2004/108842

(56) References cited:
- EP-A- 0 259 290
- EP-A- 0 456 018
- US-A- 5 691 067
- US-A- 5 726 232
- US-A1- 2001 021 679

## Description

### Cross Reference to Related Application

This application claims priority from U.S. Provisional Application Serial No. 60/476,427, filed June 6, 2003, the entire content of which is incorporated herein.

### Background of the Invention

### Field of the Invention

This invention relates to a process for coating a substrate with a non-stick coating.

### Discussion of the Prior Art

There are a number of prior art publications that disclose melt blending fluoropolymers and thermoplastic polymers, extruding the mixture, forming a powder of the extrudate and applying the powder to a substrate as a coating. These references employ acrylic resins to stabilize the coating or to serve as flow promoting agent The resulting coatings are used for architectural purposes and provide durability with regard to weather and chemical exposure.

The above coatings would be entirely unsuitable for use as non-stick coatings for high temperature applications, such as cookware. The acrylic resins would simply decompose at temperatures approaching 250° C, thereby making coatings based on such resins useless for cooking. Melt blending the solid mixture that is the precursor to the coating in the very extruder from which the mixture is extruded prior to be made into a powder would be very desirable if a homogeneous blend of fluoropolymer and thermoplastic polymer could be obtained from the extruder and if the thermoplastic polymer remained stable.

Thermally stable resin serving as an adhesion promoter when used with fluropolymers in aqueous dispersions is also known to the art, but it is not known to melt blend and extrude a solid homogeneous mixture of those ingredients at high temperature.

Presently there are some powder formulations, such as described in US patent 5,691,067, for cookware and bakeware based on silicone resin. Although they provide good heat resistance, their release properties are limited and temporary. These coatings provide initial release properties due to the presence of silicone fluids or low levels of fluoropolymer micropowder, but they do not provide adequate long term non-stick and/or release properties.

The process of the present invention provides a coated substrate having improved long term release characteristics due to the presence of high levels of fluoropolymers at the surface of the baked powder coating.

### Summary of the Invention

The present invention comprises a process for coating a substrate with a coating comprising a fluoropolymer. The process comprises the sequential steps of:
a. Preparing a solid mixture comprising one or more fluoropolymers and one or more thermoplastic polymers thermally stable at temperatures in excess of 400° C;
b. Melt blending and extruding the solid mixture at a temperature of from about 250° C to about 400° C to achieve homogeneity;
c. Subjecting the extrudate to mechanical means to obtain a powder of up to about 100 microns average particle size;
d. Applying the powder onto the substrate; and
e. Heating the substrate to a temperature sufficient to cause the powder to become sufficiently fluid to coat the substrate.

### Detailed Description of the Invention

A problem to which this invention relates is the organic solvent content of liquid coatings comprising fluoropolymers and thermoplastics. In the past this problem was partially solved using water based instead of solvent based products. This approach reduced, but did not eliminate the presence of VOC. Making a powder coating product, without any VOC as in the process of the present invention, solves this problem. Also, the powder based coating of the process of the present invention has a transfer efficiency above 95%, while most liquid based coatings have transfer efficiencies of only 50 - 75%.

For example, when an egg is dry fried on a silicone based coating, it will stick completely to the coating surface. However on the powder based coating produced by the present invention, an egg cooked in this manner will release, thus eliminating the need for cooking oil or grease.

The present invention effects melt blending a thermally stable polymer in a solid mixture with a fluoropolymer at a temperature of from about 250° C to about 400° C to achieve homogeneity. It is surprising that a homogeneous blend of fluoropolymer and thermally stable thermoplastic polymer could be melt blended and extruded to achieve homogeneity because the thermoplastic polymer has a very low melt viscosity at the melt blending temperature. Conventional wisdom was that homogeneity could not be obtained by melt blending and extrusion.

More surprising was the observation that the extrudate produced by the process of the present invention could be ground to a suitable particle size and particle size distribution for use in powder coating applications.

Preferred fluoropolymers for use in the invention may be selected from the group consisting of PTFE(Polytetrafluoroethylene), copolymers of TFE (Tetrafluoroethylene) with such co-monomers as PMVE (perfluoromethylvinylether), PPVE (perfluoropropylvinyl ether), HFP(hexafluoropropylene), Ethylene, CTFE (Chlorotrifluoroethylene) and combinations of the above comonomers.

Preferred thermoplastic polymers for use in the invention may be selected from the group consisting of Polyether Sulfones(PES), Polyarylsulfones(PAS), Polyphenyl Sulfide(PPS), Polyetheretherketones (PEEK), Polyimides(PI and Polyamideimides(PAI).

It is preferred that the amount of fluoropolymer in the solid mixture be from about 5 wt.% to about 50 wt.%, and the amount of thermoplastic polymer in the solid mixture be from about 50 wt.% to about 95 wt.%.

It is preferred that the solid mixture be blended and extruded with a twin-screw extruder. The extrudate may be formed into a strand that is cut into pellets that are ground to a powder of about 10-80 microns average particle size. The powder may be preferably applied in a layer 20-60 microns thick electrostatically onto a metal substrate, which is heated from about 370° C to about 415° C to cause the powder to become fluid.

The following examples are illustrative of the process of the present invention.

### Example 1

| | Formulas | | | | |
|---|---|---|---|---|---|
| RM | 1 | 2 | 3 | 4 | 5 |
| Ryton V1 | 75 | 75 | 73 | 71 | 69 |
| PTFE TL-1 | 19.7 | 19.05 | 19.05 | 19.05 | 19.05 |
| Channel Black | 2.35 | 2.35 | 2.35 | 2.35 | 2.35 |
| Modaflow III | 2.35 | 3 | 5 | 7 | 9 |
| Fume silica | 0.5 | 0.5 | 0.5 | 0.5 | 0.5 |
| Aluminum flakes PCF | | | | | |
| 200 | 0.1 | 0.1 | 0.1 | 0.1 | 0.1 |
| TOTAL | 100 | 100 | 100 | 100 | 100 |

Coating formulations having the above formulas were made according to the teaching of the present invention. Each ingredient is expressed as weight percentage.

Ryton V1 is a low viscosity Polyphenylene Sulfide made by Chevron-Phillips of Bartlesville, Oklahoma.

PTFE TL 10 is a fluoropolymer, best known as Polytetrafluoroethylene. It is made by AGC Chemicals Americas, Inc of Downningtown, Pennsylvania.

Channel Black is a micropulverized channel carbon black sold by Keystone Aniline Corp. of Chicago, Illinois.

Modaflow Powder III is an ethyl acrylate and 2-ethylhexyl acrylate copolymer in silica carrier. It is manufactured by UCB Surface Specialties of St. Louis, Missouri.

Fume silica, produced by Cabot Corp. or Degussa, is an additive used to improve the spray application of powder coatings.

Aluminum PCF 200 is an aluminum flake pigment manufactured by Toyal America of Lockport, IL.

In this example, Ryton V1, PTFE, pigments and other additives were blended together until a dry homogeneous mixture was obtained. This blend was then extruded at 580F in a 36 UD, twin-screw extruder, to intimately disperse its ingredients. Extruded material was pushed thru a die, which produced a strand that was cooled down in a water bath, dried, and cut off into small pellets.

Following the extrusion process, the pellets were subjected to cryogenic grinding in an ACM mill that reduced the pellets to a powder with a size of 89-63 microns (140-200 mesh).

Finally, the sieved powder was applied in a layer 20 - 60 microns thick electrostatically onto a metal substrate. The substrate was baked at 371-413°C (700-775 ° F) and a film of coating was formed, which had non-stick properties, and good adhesion to metal substrates.

The above powder coatings were tested for release and non-stick properties. First, a deep fryer was coated with a dry film thickness of 38,1 microns (1.5 mils) and baked 15 minutes at 399°C (750°F). The deep fryer with oil was heated up to 232°C (450° F) and kept like that for 10 minutes. Immediately after that, the deep fryer was emptied and the cooking oil completely drained from its surface, leaving only traces of cooking oil remaining.

The powders were observed for film formation, corrosion resistance, and coefficient of friction. It was found that the higher the level of Modaflow Powder III flow additive, the less the formation of micro-pinholes in the coating. Directly related to this observation, was an improvement in corrosion resistance on CRS (cold rolled steel) when the coating had a corresponding higher level of flow additive.

All of the samples in this example were observed to give coatings that had a kinetic coefficient of friction (COF) of 0.175. The measurement of COF was made using a Coefficient of Friction tester, model D-5095, made by Dynisco of Morgantown, Pa. This may be compared to a typical silicone-PTFE micropowder powder coating prepared per coating example 10 in US Patent 5,691,067, which was observed to have a kinetic COF of 0.200.

Other suitable additives that can be used in the process of the present invention include Modarez A25P and Modarez SPA from Syntrhon of Morgantown NC, Resiflow P67 made by Estron chemicals of Calvert city KY, and BYK 364 manufactured by BYK-Chemie USA from Wallingford CT. These additives are acrylic resins that aid in melt flow but are typically decomposed and removed from the coating after the coating has been applied to a substrate and baked.

The release properties can be further improved, as measured by COF by the addition of dry fluoropolymer powder as a cold blend to the powder described in this example.

### Example 2

| RM | 1 | 2 |
|---|---|---|
| Ryton V1 | 71.7 | 71.7 |
| PTFE TL-1 | 19 | 19 |
| Channel Black | 2.35 | 2.35 |
| Modaflow III | 2.35 | 2.35 |
| Aluminum Oxide C | 0.5 | 0.5 |
| Aluminum flakes PCF | | |
| 200 | 0.1 | 0.1 |
| PFA | 4 | 0 |
| FEP | 0 | 4 |
| TOTAL | 100 | 100 |

In this example, formulas # 1 and 2 were modified versions of the formula #1 from Example 1. In this case, a "cold blend" of fluoro polymers (PFA and/or FEP) reduced the coefficient of friction of the powder coating to 0.15.

This improvement in release can also be observed in actual cooking tests. Smooth aluminum bakeware trays were powder coated with the above powders at 38,1 microns (1.5 mils), and baked for 10 min. at 399°C @ (750F). A variety of bread and cake recipes were baked on the coated substrate without pre-conditioning (such as with grease or oil) the coated substrate. When the bakeware was turned upside down, the baked goods fell down easily without leaving any residue.

The finished powder made in the process of the invention may be cold blended with up to 10 % of additional fluoropolymers to achieve even greater non-stick properties. Such additional fluoropolymers include perfluoroalkoxy (PFA), fluorinated ethyl propylene (FEP) and a copolymer of tetrafluoroethylene, perfluoropropyl vinyl ether and perfluoromethylvinyl ether (MFA). These are melt processable fluoropolymers, in contrast to PTFE, which is not melt processable.

The finished powder may be bonded or cold blended with aluminum flakes to achieve light colors and or metallic effects.

A flow additive that serves to improve the melt flow, reduce pinholes, craters, orange peel, etc. of a powder coating may also be added to the solid mixture at levels of about 1 to about 10% by weight of the total formulation. Most flow additives for powder coatings are based on polyacrylates, such as the acrylic resins that aid in melt flow mentioned above.

Also useful in the powder formulations of the process of the invention is the addition of a hard filler which improves the abrasion resistance of the resulting coatings. Such hard fillers are selected from ceramics and metal oxides such as silicon carbide or aluminum oxide. When the particle size of the filler is small enough it can be blended in the formula following extrusion. When the particles are large (typically greater than 10 microns) then the filler can be dry blended with the coating before the extrusion and grinding process.

The hard filler may be added in an amount up to about 10 wt.% of the formulation. For example, when 4 wt. % silicone carbide fine powder (under 10 microns) was added to the formulation as part of a cold blend after the formulation was ground, the Taber abrasion test (ASTM D-4060) showed that the weight loss after 500 cycles, using one kilo weight and CS-10 wheels, decreased from 29 mgr to 11 mgr.

## Claims

1. A process for coating a substrate with a coating comprising a fluoropolymer, said process comprising the sequential steps of:
a. Preparing a solid mixture comprising PTFE (polytetrafluoroethylene) and one or more thermoplastic polymers thermally stable at temperatures in excess of 400° C;
b. Obtaining an extrudate by melt blending and extruding said solid mixture at a temperature of from about 250° C to about 400° C to achieve homogeneity;
c. Subjecting the extrudate to mechanical means to obtain a powder of up to about 100 microns average particle size;
d. Applying said powder onto said substrate; and
e. Heating said coated substrate to a temperature sufficient to cause said powder to become sufficiently fluid to coat said substrate.

2. The process of claim 1 wherein said one or more thermoplastic polymers are selected from the group consisting of Polyether Sulfones(PES), Polyarylsulfones(PAS), Polyphenyl Sulfide(PPS), Polyetheretherketones (PEEK), Polyimides(PI) and Polyamideimides(PAI).

3. The process of claim 1 wherein the amount of fluoropolymers in said solid mixture is from about 5 wt.% to about 50 wt.%.

4. The process of claim 1 wherein the amount of said one or more thermoplastic polymers in said solid mixture is from about 50 wt.% to about 95 wt.%.

5. The process of claim 1 wherein said solid mixture is blended and extruded with a twin-screw extruder.

6. The process of claim 1 wherein the extrudate is formed into a strand that is cut into pellets that are ground to a powder of about 10-80 microns average particle size.

7. The process of claim 1 wherein the powder is applied electrostatically in a layer 20-60 microns thick onto a metal substrate, which is heated from about 370° C to about 415° C to cause said powder to become fluid.

8. The process of claim 1 wherein the powder is cold blended with up to 10 % of additional fluoropolymers(PFA, FEP, MFA) to achieve greater non-stick properties.

9. The process of claim 8 wherein said additional fluoropolymers are selected from the group consisting of perfluoroalkoxy, fluorinated ethyl propylene and a copolymer of tetrafluoroethylene, perfluoropropyl vinyl ether and perfluoromethylvinyl ether.

10. The process of claim 1 wherein the powder is bonded or cold blended with aluminum flakes to achieve light colors and or metallic effects.

11. The process of claim 1 wherein a flow additive is added to the solid mixture at levels of about 1 to about 10% by weight of the total formulation.

12. The process of claim 1 wherein a filler selected from the group consisting of ceramics and metal oxides is added to the solid mixture.

13. The process of claim 12 wherein said filler comprises silicon carbide or aluminum oxide.

14. The process of claim 12 wherein said filler comprises particles having sizes less than about 10 microns, and said filler is added to the solid mixture following step b.

15. The process of claim 12 wherein said filler comprises particles having sizes equal to or greater than about 10 microns and said particles are dry blended with the solid mixture prior to step b.

## Patentansprüche

1. Verfahren zum Beschichten eines Substrats mit einer ein Fluorpolymer umfassenden Beschichtung, wobei das Verfahren die folgenden aufeinanderfolgenden Schritte umfasst:
a. Herstellen einer festen Mischung umfassend PTFE (Polytetrafluorethylen) und ein oder mehrere thermoplastische Polymere, die bei Temperaturen von mehr als 400 °C wärmebeständig sind,
b. Erhalt eines Extrudats durch ein Schmelzmischen und Extrudieren der festen Mischung bei einer Temperatur von etwa 250 °C bis etwa 400 °C, um Homogenität zu erreichen,
c. Einwirkenlassen von mechanischen Mitteln auf das Extrudat, um ein Pulver mit einer mittleren Teilchengröße von bis zu etwa 100 µm zu erhalten, und
d. Auftragen des Pulvers auf das Substrat und
e. Erwärmen des beschichteten Substrats auf eine Temperatur, die ausreichend ist, um zu bewirken, dass das Pulver ausreichend flüssig wird, um das Substrat zu beschichten.

2. Verfahren nach Anspruch 1, wobei das eine thermoplastische Polymer oder die mehreren thermoplastischen Polymere aus der aus Polyethersulfonen (PES), Polyarylsulfonen (PAS), Polyphenylsulfid (PPS), Polyetheretherketonen (PEEK), Polyimiden (PI) und Polyamidimiden (PAI) bestehenden Gruppe ausgewählt sind.

3. Verfahren nach Anspruch 1, wobei die Menge der Fluorpolymere in der festen Mischung von etwa 5 Gew.-% bis etwa 50 Gew.-% beträgt.

4. Verfahren nach Anspruch 1, wobei die Menge des einen thermoplastischen Polymers oder der mehreren thermoplastischen Polymere in der festen Mischung von etwa 50 Gew.-% bis etwa 95 Gew.-% beträgt.

5. Verfahren nach Anspruch 1, wobei die feste Mischung mit einem Doppelschnecken-Extruder vermischt und extrudiert wird.

6. Verfahren nach Anspruch 1, wobei das Extrudat zu einem Strang geformt wird, der zu Pellets geschnitten wird, die zu einem Pulver mit einer mittleren Teilchengröße von etwa 10 - 80 µm gemahlen werden.

7. Verfahren nach Anspruch 1, wobei 20 - 60 µm des Pulvers elektrostatisch auf ein Metallsubstrat aufgetragen werden, das von etwa 370 °C bis etwa 415 °C erwärmt ist, wodurch eine Verflüssigung des Pulvers bewirkt wird.

8. Verfahren nach Anspruch 1, wobei das Pulver mit bis zu 10 % zusätzlichen Fluorpolymeren (PFA, FEP, MFA) kalt vermischt wird, um stärkere Antihafteigenschaften zu erreichen.

9. Verfahren nach Anspruch 8, wobei die zusätzlichen Fluorpolymere aus der aus Perfluoralkoxy, fluoriertem Ethylpropylen und einem Copolymer von Tetrafluorethylen, Perfluorpropylvinylether und Perfluormethylvinylether bestehenden Gruppe ausgewählt sind.

10. Verfahren nach Anspruch 1, wobei das Pulver an Aluminiumflocken gebunden oder damit kalt vermischt ist, um helle Farben und/oder Metallic-Effekte zu erreichen.

11. Verfahren nach Anspruch 1, wobei ein Fließzusatz in Mengen von etwa 1 bis etwa 10 Gew.-%, bezogen auf die gesamte Formulierung, zur festen Mischung gegeben wird.

12. Verfahren nach Anspruch 1, wobei ein Füllstoff, der aus der aus Keramik und Metalloxiden bestehenden Gruppe ausgewählt ist, zur festen Mischung gegeben wird.

13. Verfahren nach Anspruch 12, wobei der Füllstoff Siliciumcarbid oder Aluminiumoxid umfasst.

14. Verfahren nach Anspruch 12, wobei der Füllstoff Teilchen mit einer Größe von weniger als etwa 10 µm umfasst und der Füllstoff nach Schritt b zur festen Mischung gegeben wird.

15. Verfahren nach Anspruch 12, wobei der Füllstoff Teilchen mit einer Größe von gleich oder größer etwa 10 µm umfasst und die Teilchen mit der festen Mischung vor Schritt b trocken vermischt werden.

## Revendications

1. Procédé de revêtement d'un substrat avec un revêtement comprenant un fluoropolymère, ledit procédé comprenant les étapes séquentielles de :
a. préparer un mélange solide comprenant du PTFE (polytetrafluoroethyline) et un ou plusieurs polymères thermoplastiques thermiquement stables à des températures excédant 400° C ;
b. mélanger à l'état fondu et extruder ledit mélange solide à une température d'environ 250° C à environ 400° C pour obtenir une homogénéité ;
c. soumettre l'extrudat à des moyens mécaniques pour obtenir une poudre ayant une granularité moyenne allant jusqu'à environ 100 microns ;
d. appliquer ladite poudre sur ledit substrat ; et
e. chauffer ledit substrat à une température suffisante pour que ladite poudre devienne suffisamment liquide pour enduire ledit substrat.

2. Procédé selon la revendication 1, dans lequel lesdits polymères thermoplastiques sont choisis dans le groupe constitué par les polyéthersulfones (PES), les polyarylsulfones (PAS), le polyphénylsulfide (PPS), les polyétheréthercétones (PEEK), les polyimides (PI) et les polyamideimides (PAI).

3. Procédé selon la revendication 1, dans lequel la quantité de fluoropolymère dans ledit mélange solide est d'environ 5 % en poids à environ 50 % en poids.

4. Procédé selon la revendication 1, dans lequel la quantité de polymère thermoplastique dans ledit mélange solide est d'environ 50 % en poids à environ 95 % en poids.

5. Procédé selon la revendication 1, dans lequel ledit mélange solide est mélangé et extrudé avec une extrudeuse à double vis.

6. Procédé selon la revendication 1, dans lequel l'extrudat est formé en un fil de base qui est coupé en pastilles qui sont broyées en une poudre d'une granularité moyenne d'environ 10 à 80 microns.

7. Procédé selon la revendication 1, dans lequel la poudre est appliquée de 20 à 60 microns de manière électrostatique sur un substrat métallique, qui est chauffé d'environ 370° C à environ 415° C pour que ladite poudre devienne liquide.

8. Procédé selon la revendication 1, dans lequel est mélangée à froid avec jusqu'à 10 % de fluoropolymères (PFA, FEP, MFA) supplémentaires pour obtenir de meilleures propriétés non collantes.

9. Procédé selon la revendication 8, dans lequel lesdits fluoropolymères supplémentaires sont choisis dans le groupe constitué par le perfluoroalcoxy, l'éthylpropylène fluoré et un copolymère de tétrafluoroéthylène, éther perfluoropropylvinylique et éther perfluorométhylvinylique.

10. Procédé selon la revendication 1, dans lequel la poudre est liée à ou mélangée à froid avec des copeaux d'aluminium pour obtenir des couleurs claires et/ou des effets métalliques.

11. Procédé selon la revendication 1, dans lequel un additif d'écoulement est ajouté au mélange solide à des taux d'environ 1 à environ 10 % en poids de la formulation totale.

12. Procédé selon la revendication 1, dans lequel une charge dure, choisie dans le groupe constitué par les céramiques et les oxydes métalliques, est ajoutée au mélange solide.

13. Procédé selon la revendication 12, dans lequel ladite charge dure comprend un carbure de silicium ou un oxyde d'aluminium.

14. Procédé selon la revendication 12, dans lequel ladite charge dure comprend des particules ayant des tailles inférieures à environ 10 microns, et ladite charge est ajoutée au mélange solide après l'étape b.

15. Procédé selon la revendication 12, dans lequel ladite charge dure comprend des particules ayant des tailles supérieures ou égales à environ 10 microns, et lesdites particules sont mélangées à sec avec le mélange solide avant l'étape b.
